# EUROPÄISCHE PATENTSCHRIFT

(11) **EP 1 160 068 B1**
(45) Veröffentlichungstag und Bekanntmachung des Hinweises auf die Patenterteilung: **23.11.2005**
(21) Anmeldenummer: 01112297.5
(22) Anmeldetag: 19.05.2001
(51) Int. Cl.: B29B 17/02, B09B 3/00, C08J 11/04

(54) **Verfahren zur Wiederverwertung von Faserverbundwerkstoffen**
Method for recycling fiber composite materials
Procédé de recyclage de matériaux composites comportant des fibres

(30) Priorität: 30.05.2000 DE 10026761
(43) Veröffentlichungstag der Anmeldung: 05.12.2001
(73) Patentinhaber: DaimlerChrysler AG, 70567 Stuttgart (DE)
(72) Erfinder: Dannenhauer, Fritz, Dr., 79686 Hasel (DE); Grundig, Petra, 89079 Ulm (DE); Sailer, Maria-Theresia, Dr., 89073 Ulm (DE)

(56) Entgegenhaltungen:
- EP-A- 0 569 632
- DE-A- 4 126 145
- FR-A- 2 711 079
- US-A- 5 391 595
- US-A- 5 505 008
- US-A- 5 683 038

## Beschreibung

Die Erfindung betrifft ein Verfahren nach dem Oberbegriff des Patentanspruchs 1.

Ein gattungsgemäßes Verfahren ist aus der EP 636 428 bekannt. Hierbei werden Faserverbundwerkstoffe mit einer Verstärkung aus Kohlenstofffasern in einem vierstufigen Prozeß zunächst unter Ausschluss von Sauerstoff eine Woche verkokt, d. h. die organische Matrix wird zu Kohlenstoff reduziert. In einem nächsten Schritt wird dem Verkokungsprodukt, das aus Kohlenstoff und Kohlenstofffasern besteht ein verkokbares Bindemittel beigemischt, anschließend wird diese Mischung einer Formgebung unterzogen und schließlich wiederum zu einem endgültigen Kohlenstoffaser verstärkten Kohlenstoff (C/C) verkokt. Dieses Verfahren dient besonders zu Wiederverwertung von Preprag-Abfällen, die bei der Herstellung von C/C-Werkstoffen anfallen.

Ein Nachteil dieses Verfahrens besteht darin, dass es sehr langwierig ist und nur zum Wiederverwerten von kohlenstofffaserhaltigen Verbundwerkstoffen geeignet ist. Organische Fasern, wie z. B. Aramid-Fasern würden in diesen Prozeß zerstört werden. Weiterhin werden die Fasern nicht von der Matrix getrennt und können demnach nicht für die Herstellung eines andersartigen Faserverbundwerkstoffes verwendet werden.

Aus der US 5683038 ist ein Verfahren zur Trennung von Stahlkomponenten und Gummi von Stahlgürtelreifen offenbart. Dabei wird die Festigkeit des Gummis auf ein Niveau gesenkt, dass eine mechanische Trennung zulässt, indem das Gummi elektromagnetische Energie, bevorzugt durch Mikrowellenstrahlung, eingebracht wird. In einer anderen Ausgestaltung wird offenbart, das Gummi durch Einwirkung einer Hochtemperatur, Niederdruck-Flüssigkeit, wie Dampf oder überhitzen Dampf aufzuweichen.

Aus der FR 9312396 ist ein Recycling-Verfahren für Kunststoffe bekannt, wobei hierdurch Kunststoff-Platten oder -blöcke gefertigt werden. Das Verfahren umfasst das Auflösen der Kunststoff-Abfallmaterialien in einem Lösungsmittel, um ein e dicke Kunststoff-Paste zu erzeugen. Die Kunststoff-Paste wird durch Bestrahlung erwärmt und hierauf umgeformt.

Aus der DE 412645 A1 ist ein Verfahren und eine Anlage zum Aufbereiten von biologisch kontaminierten Abfällen zur Wiederverwendung bekannt. Das Verfahren sieht vor, den zu dekontaminierenden Abfall mit einer Flüssigkeit zu befeuchten, deren Siedepunkt oberhalb 100°C liegt und Ultraschall einzuleiten. Hierauf erfolgt eine stoffliche Rückgewinnung, beispielsweise durch Filtern, Dekantieren oder dergleichen der Flüssigkeit.

Aus der EP 0569632 A1 ist ein Verfahren zur Herstellung formbarer thermoplastischer Harze aus zumindest teilweise vulkanisiertem Gummi bekannt. Das Verfahren sieht vor, das Gummi in Partikelform mit einem hochsiedenden Paraffin-Destillat zu behandeln, und darauf unter Erhitzung eine Reaktion zwischen diesen beiden Komponenten einzuleiten. Hierauf wird der Mischung thermoplastisches Polymer oder Harz zugesetzt, homogenisiert und die Masse extrudiert. Die Gummi/Paraffin-Mischung kann mittels Mikrowellenenergie erhitzt werden.

Aus der US 5391595 ist ein Verfahren bekannt polymeres Verbundmaterial auf eine definierte Temperatur zu erhitzen. Dabei enthält das polymere Material ferromagnetische Partikel, die eine Curietemperatur aufweisen, welche der definierten Temperatur entspricht. Die Erhitzung erfolgt mittels Mikrowellenstrahlung. Hierdurch wird das Verbundmaterial teilweise aufgeschmolzen, was eine Abtrennung des aufgeschmolzenen Anteils ermöglicht.

Aus der US 5505008 ist ein Recycling-Verfahren für organische Substanzen bekannt, bei dem die organischen Substanzen unter vermindertem Druck, Schutzgasatmosphäre und Temperatureinwirkung teilweise pyrolysiert werden. Dabei werden leichtflüchtige Bestandteile abgespalten und spröde Rückstände gebildet. Die Erwärmung kann unter anderem durch Mikrowellenbestrahlung herbeigeführt werden.

Der Erfindung liegt demnach die Aufgabe zu Grunde, Faserverbundwerkstoffe mit einer organischen Matrix derart wieder aufzubereiten, dass die Fasern von der Matrix so getrennt werden, dass diese anschließend als Rohmaterial wieder zur Verfügung gestellt werden können.

Die Lösung der Aufgabe erfolgt durch ein Verfahren mit den Merkmalen des Patentanspruchs 1.

Das erfindungsgemäße Verfahren nach Patentanspruch 1 sieht vor, dass ein Energieeintrag in einen Verbundwerkstoff über elektromagnetische Wellen erfolgt. Die Materialphasen des Verbundwerkstoffes (Matrix, Fasern) absorbieren die elektromagnetischen Wellen in unterschiedlichem Maße. Üblicherweise erfolgt durch die Matrix oder Teilen der Matrix eine stärkere Absorption der elektromagnetischen Wellen als durch die Fasern. Es erfolgt somit eine selektive Erwärmung der Matrix, was zur Zersetzung der Matrix und eine Trennung zwischen den Fasern und der Matrix führt. Die Fasern bleiben hierbei nahezu in ihrer ursprünglichen Form, Struktur und Qualität erhalten. Damit kann der weitaus größte Teil der aufbereiteten Fasern dem Herstellungsprozess von Verbundwerkstoffen bei nur geringen Qualitätsminderung wieder zugeführt werden. Mögliche Qualitätsminderungen ergeben sich durch die Länge der wiederaufbereiteten Fasern, was wiederum auf den Zerkleinerungsgrad des aufzubereitenden Verbundwerkstoffes zurückzuführen ist. Demnach ist es anzustreben, möglichst große Teilstücke des Verbundwerkstoffes aufzubereiten. Von besonderem Vorteil ist es, den Verbundwerkstoff während des Energieeintrages in ein Lösungsmittel zu geben. Dies gilt besonders bei Verbundwerkstoffen mit organischen Matrizes. Durch das selektive Erwärmen der Matrix werden deren Polymerketten aufgebrochen, zerkleinert und direkt im Lösungsmittel gelöst. Ferner unterstützt das Lösungsmittel das Aufspalten der Polymerketten. Die Fasern werden durch das Lösungsmittel nicht angegriffen und nahezu vollständig von der Matrix getrennt.

Es ist im Sinne des erfindungsgemäßen Verfahrens von Vorteil, wenn die Matrix des Verbundwerkstoffes einen höheren dielektrischen Verlustfaktor aufweist als die Fasern. Dies führt zu einer selektiven Energieeinkopplung und einer selektiven Erwärmung der Matrix, was im Weiteren zu der Trennung von Fasern und Matrix führt.

Die besten Ergebnisse für einen Energieeintrag werden durch elektromagnetische Wellen im Mikrowellenbereich zwischen 300 MHz und 300 GHz erzielt, die gepulst oder kontinuierlich sein können. Ein besonders vorteilhaftes Frequenzband liegt zwischen 2 GHz und 3 GHz. Hierfür können handelsübliche Mikrowellengeneratoren verwendet werden, die auch in anderen technischen Bereichen Verwendung finden.

Das Lösungsmittel kann ebenfalls zur Energieübertragung an die Matrix des Verbundwerkstoffes beitragen, wenn dieses Mikrowellen absorbiert und sich erwärmt, zudem nimmt die Fähigkeit, organische Moleküle zu lösen mit der Temperatur des Lösungsmittels zu. Es hat sich als vorteilhaft heraus gestellt, polare Lösungsmittel anzuwenden, die in hohem Maße Mikrowellen absorbieren und sich hierbei aufheizen. Besonders geeignet sind hierfür polare protische Lösungsmittel, wie beispielsweise Phosphorsäure, Schwefelsäure, Salpetersäure, Essigsäure oder Zitronensäure, sowie Polare aprotische Lösungsmittel wie beispielsweise Wasser, (cyclo-) aliphatische und/oder aromatische (Poly-)alkohole, (Poly-)ester, (Poly-)anhydride, (Poly-) aminoalkohole, (Poly-)amine, (Poly-)amide, (Poly-)amidoamine, (Poly-)sulfone, (Poly-)sulfoxide, oder Mischungen hieraus. Es kann zudem vorteilhaft sein, dem Lösungsmittel Additive beizugeben, die zusätzlich Mikrowellen absorbierend wirken, wie Ruß oder Ethanol und/oder Additive beizugeben, die die Lösungswirkung des Lösungsmittel katalytisch unterstützen, wie z. B. p-Toluolsulfonsäure oder organische Basen.

Bei der Unterstützung des erfindungsgemäßen Verfahrens durch ein Lösungsmittel müssen das Lösungsmittel und der Verbundwerkstoff in einem Behälter aufbewahrt werden. Hierfür hat sich Teflon® (Polytetrafluorethylen) als Behältermaterial als zweckmäßig herausgestellt, da es transparent für Mikrowellen ist und gegenüber den meisten Lösungsmitteln inert ist.

Der Behälter ist druckfest verschließbar, durch die Erwärmung des Lösungsmittels wird ein Überdruck im Behälter aufgebaut, wodurch die Wirkung des Lösungsmittels verstärkt wird.

Nach dem Trennvorgang hat sich die Matrix im Lösungsmittel aufgelöst, die Fasern schwimmen im Lösungsmittel. Zur Trennung von Lösungsmittel und Fasern ist es zweckmäßig, dieses Gemenge zu filtrieren, beispielsweise durch ein herkömmliches Filterpapier. Anschließend können die Fasern aus dem Filter entnommen werden, gereinigt werden (z. B. mit Ethanol oder destilliertem Wasser) und dem Herstellungsprozess von Verbundwerkstoffen wieder zugeführt werden.

Der größte Teil von faserverstärkten Verbundwerkstoffen weist eine Matrix aus organischen Materialien auf, häufig thermoplastische und duroplastische Kunststoff(-harz-)matrizes wie beispielsweise Epoxide, Polyester, Polyamide und Polyimide oder Mischungen hieraus. Derartige Matrizes lassen sich sehr gut mit Unterstützung der genannten Lösungsmitteln von den Fasern trennen. Andererseits ist es möglich, mit dem erfindungsgemäßen Verfahren Verbundwerkstoffe mit anorganischen Matrizes zu trennen. Als Beispiel sei hier Kohlenstofffaser verstärkte Verbundwerkstoffe mit einer Matrix aus Siliziumkarbid genannt.

Wie bei den Matrizes können auch die Fasern ebenfalls organischer (z. B. Aramid-Fasern) oder anorganischer Natur (z. B. Kohlenstofffasern, Glasfasern, SiC-Fasern) sein. Ferner können Mischungen verschiedener Arten von Fasern vorkommen. Besonders effizient wird das Verfahren bei Verbundwerkstoffen, die mit Kohlenstofffasern verstärkt sind angewendet, da bei Kohlenstofffasern derzeit die höchste Nachfrage und das höchste Preisniveau vorherrscht.

Die Erfindung ist im Folgenden anhand von Zeichnungen und weiteren ausgewählten Ausführungsbeispielen näher erläutert.

Es zeigen:
- Fig. 1: eine Anordnung zur Durchführung des erfindungsgemäßen Verfahrens, mit einem Mikrowellenofen und einem Behälter mit einem Lösungsmittel und einem Verbundwerkstoff.

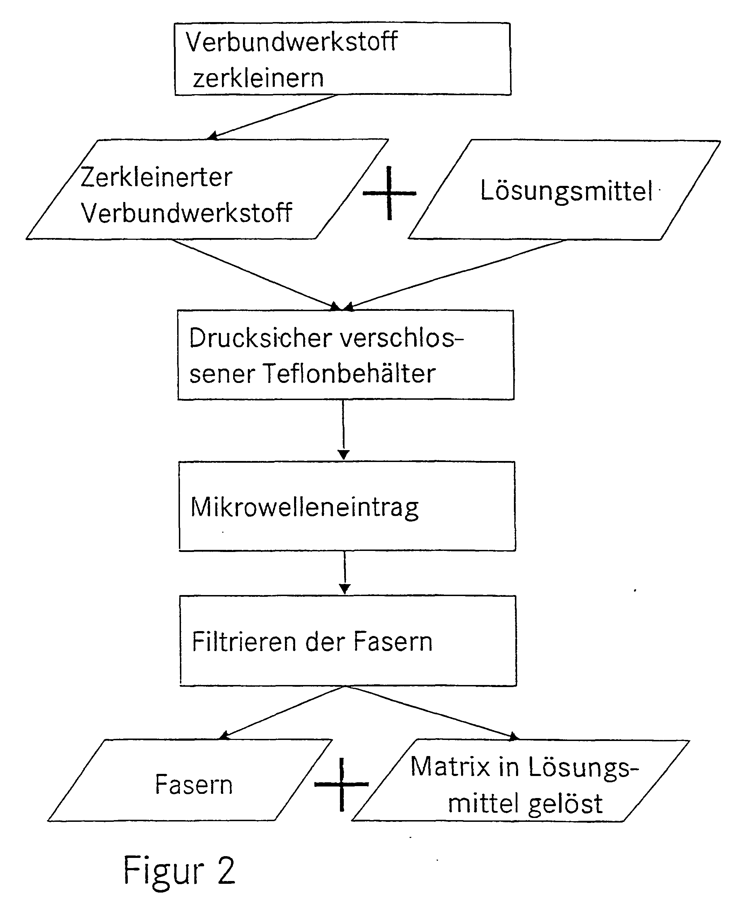

- Fig. 2: ein Verfahrensschema des erfindungsgemäßen Verfahrens anhand eines Flussdiagramms und
- Fig. 3: ein Diagramm, das die in den Verbundwerkstoff eingebrachte Mikrowellenleistung als Funktion der Prozesszeit darstellt.

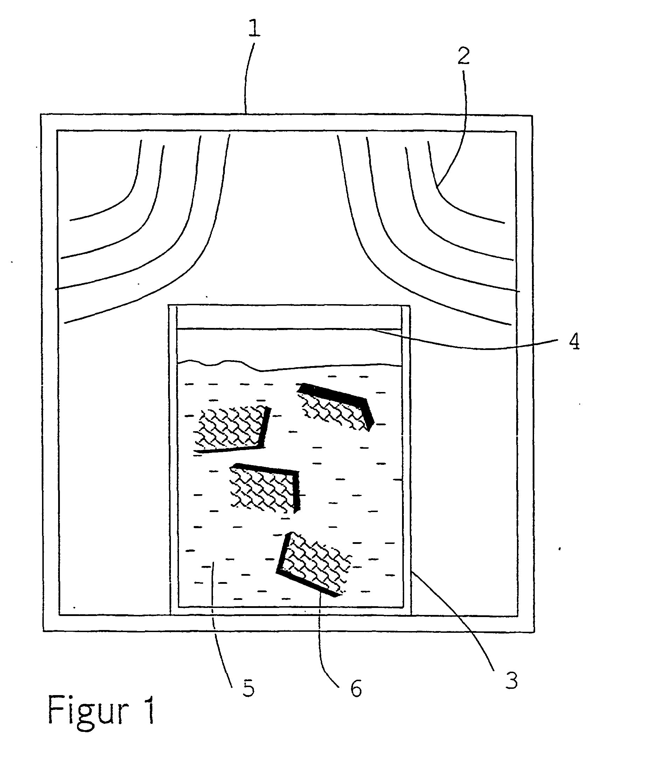

In Figur 1 ist eine Anordnung zur Durchführung des Verfahrens gezeigt. Hierbei werden zerkleinerte Stücke eines faserverstärkten Verbundwerkstoffes 6 mit einem Lösungsmittel 5 in einen Teflon®-behälter 3 gegeben, der mit einem Deckel 4 drucksicher verschlossen ist. Durch einen Mikrowellengenerator, der in einem Mikrowellenofen 1 integriert ist, werden Mikrowellen 2 ausgesendet, die den Teflon®-behälter 3 durchdringen und mit dem Lösungsmittel 5, sowie mit einer organischen Matrix des Verbundwerkstoffes 6 ankoppeln. Das Lösungsmittel und die Matrix erwärmen sich, wobei sich die Matrix von Fasern des Verbundwerkstoffes trennt und im Lösungsmittel löst. Anschließend werden die Fasern vom Lösungsmittel filtriert. Die Fasern sind für die Herstellung von neuen Verbundwerkstoffen wiederverwendbar.

### Beispiel 1

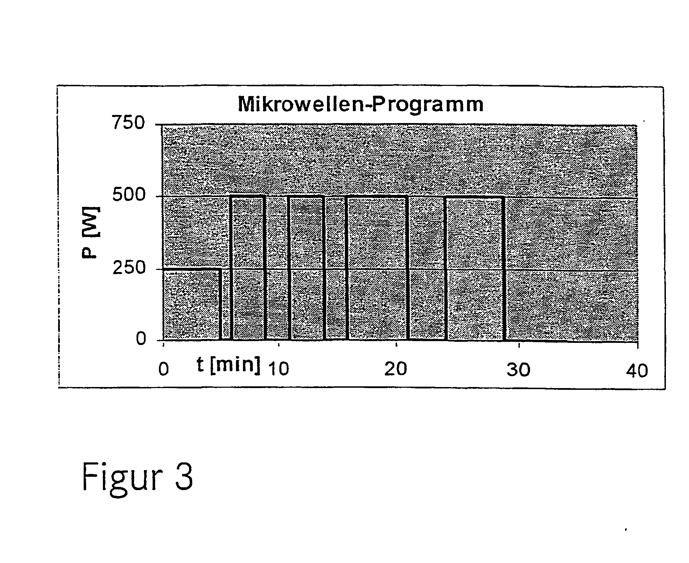

Als Testmaterial diente ein handelsübliches Mischgewebe aus Glasfaser (GFK) und Kohlenstofffaser (CFK) verstärktem Kunststoff mit ausgehärtetem Epoxidharz als Kunststoffmatrix, wie es im Flugzeugbau Verwendung findet. Ein quadratisches Probestückchen der Kantenlänge 1 cm wurde zusammen mit 20 ml 48-proz. Schwefelsäure in dem Teflon®-behälter 3 in den Mikrowellenofen 1 gemäß Fig. 1 eingebracht, und das Mikrowellen-Programm (Fig. 3), das einen Energieeintrag von 0.196 Wh gestattet, gestartet. Nach Ablauf der Programmzeit wurde der Inhalt des Druckbehälters filtriert, dabei blieben die, von der Kunststoffmatrix vollständig befreiten Kohlenstofffasern und Glasfasern zurück. Diese wurden mit destilliertem Wasser gespült und anschließend an der Luft getrocknet.

### Beispiel 2

Als Testmaterial diente ein handelsübliches CFK-Gewebe mit ausgehärtetem Epoxid als Kunststoffmatrix, wie es im Flugzeugbau Verwendung findet. Ein quadratisches Probestückchen der Kantenlänge 1 cm wurde zusammen mit 20 ml N-Methylpyrrolidon in den Teflon®-behälter 3 in den Mikrowellenofen 1 gemäß Fig. 1 eingebracht, und das Mikrowellen-Programm (Fig. 3), das einen Energieeintrag von 0.196 Wh gestattet, gestartet. Nach Ablauf der Programmzeit wurde der Inhalt des Druckbehälters filtriert, dabei blieben die von der Kunststoffmatrix vollständig befreiten Kohlenstofffasern zurück. Diese wurden mit destilliertem Wasser gespült und anschließend an der Luft getrocknet.

## Patentansprüche

1. Verfahren zur Wiedergewinnung von Fasern von faserverstärkten Verbundwerkstoffen, die Fasern und eine Matrix umfassen,
**dadurch gekennzeichnet, dass**
- der Verbundwerkstoff Mikrowellen mit einem Frequenzband zwischen 300 MHz und 300 GHz ausgesetzt wird,
- dass durch die Mikrowellen ein Energieeintrag auf den Verbundwerkstoff erfolgt,
- dass der Verbundwerkstoff in einem Lösungsmittel den Mikrowellen in der Weise ausgesetzt wird, dass sich die Matrix im Lösungsmittel auflöst und
- dass nach dem Energieeintrag die Fasern vom Lösungsmittel getrennt werden.

2. Verfahren nach Anspruch 1,
**dadurch gekennzeichnet, dass**
die Moleküle der Matrix stärker durch die elektromagnetischen Wellen angeregt werden als die Moleküle der Fasern.

3. Verfahren nach einem der Ansprüche 1 bis 2,
**dadurch gekennzeichnet, dass**
dass die Moleküle des Lösungsmittels eine Polarisation aufweisen.

4. Verfahren nach einem der Ansprüche 1 bis 3,
**dadurch gekennzeichnet, dass**
der Verbundwerkstoff und das Lösungsmittel in einem Behälter aus einem Polytetrafluorethylen-haltigem Material den Mikrowellen ausgesetzt werden.

5. Verfahren nach einem der Ansprüche 1 bis 4,
**dadurch gekennzeichnet, dass**
der Behälter druckfest verschlossen wird und durch den Energieeintrag im Behälter ein Überdruck entsteht.

6. Verfahren nach einem der Ansprüche 1 bis 5,
**dadurch gekennzeichnet, dass**
nach dem Energieeintrag die Fasern vom Lösungsmittel durch eine Filtration getrennt werden.

7. Verfahren nach einem der Ansprüche 1 bis 6,
**dadurch gekennzeichnet, dass**
die sich die Matrix des Verbundwerkstoffes aus organischen Materialien oder anorganischen Materialien zusammensetzt.

8. Verfahren nach einem der Ansprüche 1 bis 7,
**dadurch gekennzeichnet, dass**
der faserhaltige Verbundwerkstoff Kohlenstofffasern und/oder Glasfasern und/oder organischen Fasern und/oder keramische Fasern und/oder metallische Fasern enthält.

## Claims

1. Process for recovering fibres from fibre-reinforced composite materials which comprise fibres and a matrix, **characterized in that**
- the composite material is exposed to microwaves with a frequency band between 300 MHz and 300 GHz,
- **in that** energy is introduced to the composite material by the microwaves,
- **in that** the composite material is exposed to the microwaves in a solvent, in such a manner that the matrix is dissolved in the solvent, and
- **in that** the fibres are separated from the solvent after the energy has been introduced.

2. Process according to Claim 1, **characterized in that** the molecules of the matrix are excited more strongly by the electromagnetic waves than the molecules of the fibres.

3. Process according to either of Claims 1 and 2,
**characterized in that** the molecules of the solvent are polarized.

4. Process according to one of Claims 1 to 3,
**characterized in that** the composite material and the solvent are exposed to the microwaves in a container made from a polytetrafluoroethylene-containing material.

5. Process according to one of Claims 1 to 4,
**characterized in that** the container is closed in a pressure-tight manner and an excess pressure is generated in the container as a result of the introduction of energy.

6. Process according to one of Claims 1 to 5,
**characterized in that** after the introduction of energy the fibres are separated from the solvent by filtration.

7. Process according to one of Claims 1 to 6,
**characterized in that** the matrix of the composite material is composed of organic materials or inorganic materials.

8. Process according to one of Claims 1 to 7,
**characterized in that** the fibre-containing composite material contains carbon fibres and/or glass fibres and/or organic fibres and/or ceramic fibres and/or metallic fibres.

## Revendications

1. Procédé pour le recyclage des fibres de matériaux composites renforcés par des fibres et qui comprennent des fibres et une matrice, **caractérisé en ce**
- **que** le matériau composite est soumis à des micro-ondes dans une bande de fréquences allant de 300 MHz à 300 GHz ;
- **qu'**il se produit un apport d'énergie dans le matériau composite par les micro-ondes ;
- **que** le matériau composite est soumis aux micro-ondes dans un solvant de manière telle que la matrice se dissolve dans le solvant et
- **qu'**après l'apport d'énergie, les fibres sont séparées du solvant.

2. Procédé selon la revendication 1, **caractérisé en ce que** les molécules de la matrice sont davantage excitées par les ondes électromagnétiques que les molécules des fibres.

3. Procédé selon l'une quelconque des revendications 1 à 2, **caractérisé en ce que** les molécules du solvant présentent une polarisation.

4. Procédé selon l'une quelconque des revendications 1 à 3, **caractérisé en ce que** le matériau composite et le solvant sont soumis aux micro-ondes dans un récipient fabriqué dans un matériau contenant du polytétrafluoroéthylène.

5. Procédé selon l'une quelconque des revendications 1 à 4, **caractérisé en ce que** le récipient est fermé à l'épreuve de la pression et qu'une surpression est générée dans le récipient suite à l'apport d'énergie.

6. Procédé selon l'une quelconque des revendications 1 à 5, **caractérisé en ce qu'**après l'apport d'énergie, les fibres sont séparées du solvant par filtration.

7. Procédé selon l'une quelconque des revendications 1 à 6, **caractérisé en ce que** la matrice du matériau composite se compose de matériaux organiques ou de matériaux inorganiques.

8. Procédé selon l'une quelconque des revendications 1 à 7, **caractérisé en ce que** le matériau composite comportant des fibres contient des fibres de carbone et/ou des fibres de verre et/ou des fibres organiques et/ou des fibres céramiques et/ou des fibres métalliques.
